# EUROPEAN PATENT APPLICATION

(11) **EP 4 520 780 A1**
(43) Date of publication of application: **12.03.2025**
(21) Application number: 24767358.5
(22) Date of filing: 29.02.2024
(51) Int. Cl.: C08J 5/18, C08L 67/04, C08L 33/06, B29C 48/00

(54) **MANUFACTURING METHOD OF POLYLACTIC ACID BLOWN FILM**

(30) Priority: 03.03.2023 KR 20230028617
(71) Applicant: LG CHEM, LTD., Yeongdeungpo-gu Seoul 07336 (KR)
(72) Inventor: PARK, Si Jung, Daejeon 34122 (KR); YOO, Kihyun, Daejeon 34122 (KR); OH, Wan Kyu, Daejeon 34122 (KR); WOO, Won Hee, Daejeon 34122 (KR); MOON, Junsoo, Daejeon 34122 (KR)
(74) Representative: Goddar, Heinz J.
(86) International application number: PCT/KR2024/002705
(87) International publication number: WO 2024/186069

(57) **Abstract**

The present disclosure relates to a method for manufacturing a polylactide blown film. According to the present disclosure, a polylactide blown film having high transparency and excellent surface property can be provided without additives such as a plasticizer, and the like, and process stability can be improved.

## Description

### [Technical Field]

### Cross-reference to Related Applications

This application claims the benefit of Korean Patent Application No. 10-2023-0028617 filed on March 3, 2023 and Korean Patent Application No. 10-2024-0029918 filed on February 29, 2024 with the Korean Intellectual Property Office, the disclosures of which are herein incorporated by reference in their entirety.

The present disclosure relates to a manufacturing method that can a polylactide blown film having excellent transparency and surface property without a plasticizer.

### [Background Art]

Polylactic acid polymer (hereinafter, referred to as 'PLA') is biodegradable ecofriendly material, and a lot of studies thereon have been conducted in recent years. PLA, unless modified, is generally a linear molecule and has thermoplastic polymer-like nature, and is utilized as materials of various films, fibers and other molded products.

It is known that a film, particularly a blown film, comprising PLA is difficult to manufacture, and additives such as a plasticizer should be added for manufacture. However, the plasticizer is often undesirable in films used for food-related uses, and has poor compatibility with PLA, and thus, is sometimes leached. To avoid such problems, solution casting is used, but in case a PLA film is manufactured by solution casting, only a film of limited use can be produced, and the process cost is very high.

Accordingly, there is a demand for a novel manufacturing method that can manufacture a PLA blown film having excellent properties without a plasticizer.

### [Disclosure of Invention]

### [Technical Problem]

It is an object of the invention to provide a manufacturing method of a polylactide blown film that can provide a polylactide blown film having high transparency and excellent surface property, and can improve process stability.

### [Technical Solution]

Thus, according to one embodiment of the invention, there is provided a method for manufacturing a polylactide blown film comprising steps of: preparing a mixture comprising polylactide polymer and epoxy group-containing acrylate terpolymer (step 1); subjecting the mixture to reactive extrusion to prepare branched polylactide polymer in the form of pellets (step 2); and subjecting the pellets to blown extrusion to manufacture a blown film (step 3), wherein the epoxy group-containing acrylate terpolymer comprises 30 wt% to 50 wt% of repeat units derived from first alkyl (meth)acrylate monomers, 30 wt% to 60 wt% of repeat units derived from glycidyl (meth)acrylate monomers, and 10 wt% to 20 wt% of repeat units derived from second alkyl (meth)acrylate monomers, and the first alkyl (meth)acrylate monomers and the second alkyl (meth)acrylate monomers are different from each other, and the mixture of the step 1 comprises epoxy group-containing acrylate terpolymer in the content of 0.1 parts by weight or more and less than 1.0 part by weight, based on 100 parts by weight of the polylactide polymer.

The epoxy group-containing acrylate terpolymer may comprise 30 wt% to 45 wt% of repeat units derived from first alkyl (meth)acrylate monomers, 30 wt% to 45 wt% of repeat units derived from glycidyl (meth)acrylate monomers, and 10 wt% to 20 wt% of repeat units derived from second alkyl (meth)acrylate monomers.

The number of epoxy groups per molecule of the epoxy group-containing acrylate terpolymer may be 30 to 80.

Each of the first alkyl (meth)acrylate and the second alkyl (meth)acrylate may be independently, at least one selected from the group consisting of methyl(meth)acrylate, butyl acrylate and 2-(ethylhexyl)acrylate.

The polylactide film may have weight average molecular weight of 200,000 g/mol to 500,000 g/mol, measured by gel permeation chromatography using polystyrene standard.

The mixture of the step 1 may comprise epoxy-based acrylate terpolymer in the content of 0.5 parts by weight to 0.75 parts by weight, based on 100 parts by weight of the polylactide polymer.

The mixture of the step 1 may further comprise one or more selected from the group consisting of a slip agent and an anti-blocking agent.

The reactive extrusion of the step 2 may be conducted at a temperature of 150 °C to 220 °C.

In the reactive extrusion of the step 2, a screw rotation speed of an extruder may be 100 rpm to 300 rpm.

The blown extrusion of the step 3 may be conducted at a temperature of 200 °C to 230 °C; and pressure of 10 bar to 50 bar.

### [Effects]

According to the present disclosure, a polylactide blown film having high transparency and excellent surface property can be provided without additives such as a plasticizer, and the like, and process stability can be improved without increasing a cost.

### [Brief Description of Drawings]

Fig. 1 shows the molecular weight measurement results of the pellets prepared in Examples and Comparative Examples.
Fig. 2 shows the molecular weight measurement results of the blown films manufacture in Examples and Comparative Examples.
Fig. 3 shows the appearances of the blown films prepared in Examples and Comparative Examples, and the figures of bubbles when extruding the blown films.

### [Best Mode for Carrying Out the Invention]

The terms used herein are only to explain specific embodiments, and are not intended to limit the invention. The singular expressions used herein may include the plural expressions unless the context clearly indicate otherwise. The meaning of the term "comprise", "equip", or "have" and the like, used in the specification designates the existence of practiced characteristics, steps, constructional elements, and/or combinations thereof, and does not exclude the possibility of existence or addition of other characteristics, steps, constructional elements, or combinations thereof.

Although various modifications can be made to the invention and the invention may have various forms, specific examples will be illustrated and explained in detail below. However, it should be understood that it is not intended to limit the invention to specific disclosure, and that the invention includes all the modifications, equivalents or replacements thereof without departing from the spirit and technical scope of the invention.

As used herein, the term 'long chain branching (LCB)' refers to a long chain that has a carbon number similar to that of the backbone chain such that it cannot be distinguished form the backbone chain.

As used herein, the term 'unit derived from' and 'repeat unit derived from' may respectively mean a component, unit, structure coming from any material or the material itself.

Hereinafter, the present disclosure will be explained in detail.

The present disclosure relates to a method for manufacturing a polylactide blown film having high transparency and excellent surface property without a plasticizer.

Specifically, according to one embodiment of the invention, there is provided a method for manufacturing a polylactide blown film comprising steps of:
preparing a mixture comprising polylactide polymer and epoxy group-containing acrylate terpolymer (step 1);
subjecting the mixture to reactive extrusion to prepare branched polylactide polymer in the form of pellets (step 2); and
subjecting the pellets to blown extrusion to manufacture a blown film (step 3),
wherein the epoxy group-containing acrylate terpolymer comprises 30 wt% to 50 wt% of repeat units derived from first alkyl (meth)acrylate monomers, 30 wt% to 60 wt% of repeat units derived from glycidyl (meth)acrylate monomers, and 10 wt% to 20 wt% of repeat units derived from second alkyl (meth)acrylate monomers, and
the first alkyl (meth)acrylate monomers and the second alkyl (meth)acrylate monomers are different from each other, and the mixture of the step 1 comprises epoxy group-containing acrylate terpolymer in the content of 0.1 parts by weight or more and less than 1.0 part by weight, based on 100 parts by weight of the polylactide polymer.

Previously, to prepare a polylactide blown film, a plasticizer was required, but it was often inappropriate for a film for food-related application due to harmfulness to human body, and had a problem of leaching due to poor compatibility with **PLA.** Further, in case **a PLA** film is manufactured by solution casting, only a film of limited use can be produced, and the process cost is very high.

Thus, the inventors of the present disclosure studied on a method for manufacturing a PLA blown film having excellent properties without additives such as a plasticizer, and the like, and as the result, confirmed that by subjecting a mixture comprising PLA and epoxy group-containing acrylate terpolymer to reactive extrusion and blown extrusion, a PLA blown film having excellent properties can be manufactured, and completed the invention.

Specifically, the epoxy group-containing acrylate terpolymer functions as a branching agent for PLA. Thus, during the process of reactive extrusion of the mixture, long-chain branching (LCB) is introduced in PLA, and the linear structure of PLA polymer is modified to form a sufficient branched structure. As such, PLA polymer having a branched structure has increased elasticity and can stably form bubbles when subjected to blown extrusion, and thus, a blown film having a smooth surface and a uniform thickness can be manufactured. Further, in case the epoxy group-containing acrylate terpolymer is used as a branching agent, the manufactured blown film may have high transparency and exhibit excellent appearance property.

Hereinafter, the manufacturing method of a polylactide blown film will be explained according to steps in detail.

### (Step 1)

In the manufacturing method according to one embodiment of the invention, first, a mixture comprising polylactide polymer and epoxy group-containing acrylate-based terpolymer is prepared.

The polylactide polymer is thermoplastic polyester obtained by polymerization of lactide or lactic acid, and comprises polymer having repeat units of -[OC(O)CH(CH₃)]-.

Further, the polylactide polymer may be one or more selected from the group consisting of poly L-lactide, poly D-lactide and poly L,D-lactide.

Further, the polylactide polymer may have repeat units derived from alkylene oxide, or repeat units derived from other monomers that can be copolymerized with lactide, and in this case, the repeat units derived from alkylene oxide, or repeat units derived from other monomers that can be copolymerized with lactide may exist in block and/or random arrangement. Further, in case the polylactide polymer comprises repeat units derived from alkylene oxide, or repeat units derived from other monomers that can be copolymerized with lactide, it may comprise the repeat units in the content of 10 wt% or less, specifically 5 wt% or less.

Further, the polylactide polymer may have relative weight average molecular weight, measured by gel permeation chromatograph using polystyrene standard, of 50,000 g/mol or more, or 100,000 g/mol or more, and 300,000 g/mol or less, or 250,000 g/mol or less, and molecular weight distribution of 1.2 or more, or 1.5 or more, and 4 or less, or 3 or less.

As the polylactide polymer, those commonly known in the art can be purchased and used, or it can be prepared and used, and in case it is prepared, it may be prepared by a common polymerization method using lactide or lactic acid as monomers.

The epoxy group-containing acrylate terpolymer functions for reacting with the polylactide polymer to introduce long-chain branching (LCB) in step 2 described below. Thereby, a branched structure is formed in the polylactide polymer to improve elasticity, and bubbles may be stably formed during blown extrusion, thus providing a polylactide blown film having excellent qualities.

The epoxy group-containing acrylate terpolymer comprises 30 wt% to 50 wt% of repeat units derived from first alkyl (meth)acrylate monomers, 30 wt% to 60 wt% of repeat units derived from glycidyl (meth)acrylate monomers, and 10 wt% to 20 wt% of repeat units derived from second alkyl (meth)acrylate monomers, and the first alkyl (meth)acrylate monomers and the second alkyl (meth)acrylate monomers are different from each other.

In one embodiment, the epoxy group-containing acrylate terpolymer may comprise 30 wt% to 45 wt% of repeat units derived from first alkyl (meth)acrylate monomers, 30 wt% to 45 wt% of repeat units derived from glycidyl (meth)acrylate monomers, and 10 wt% to 20 wt% of repeat units derived from second alkyl (meth)acrylate monomers.

The epoxy group-containing acrylate terpolymer may comprise 40 wt% to 45 wt% of repeat units derived from first alkyl (meth)acrylate monomers, 40 wt% to 45 wt% of repeat units derived from glycidyl (meth)acrylate monomers, and 10 wt% to 20 wt% of repeat units derived from second alkyl (meth)acrylate monomers.

Wherein, each of the first alkyl (meth)acrylate monomers and the second alkyl (meth)acrylate monomers may be independently one or more selected from the group consisting of methyl methacrylate, methyl acrylate, butyl methacrylate, butyl acrylate, and 2-ethylhexyl acrylate, and they may be different from each other. Specifically, each of the first alkyl (meth)acrylate monomers and the second alkyl (meth)acrylate monomers may be independently methyl methacrylate, methyl acrylate, butyl methacrylate, or butyl acrylate, and they may be different from each other. More specifically, the first alkyl (meth)acrylate monomers may be methyl methacrylate and the second alkyl (meth)acrylate monomers may be butyl methacrylate.

Further, the glycidyl (meth)acrylate monomers may be glycidyl methacrylate monomers or glycidyl acrylate monomers.

The epoxy group-containing acrylate terpolymer may be prepared by polymerization of first alkyl (meth)acrylate monomers, glycidyl (meth)acrylate monomers and second alkyl(meth)acrylate monomers that are different from the first alkyl (meth)acrylate monomers in the presence of an emulsifier.

Specifically, the epoxy group-containing acrylate terpolymer may be prepared by polymerizing 30 wt% to 50 wt% of first alkyl (meth)acrylate monomers, 30 wt% to 60 wt% of glycidyl (meth)acrylate monomers and 10 wt% to 20 wt% of second alkyl (meth)acrylate monomers that are different from the first alkyl (meth)acrylate monomers in a solvent, in the presence of an emulsifier, wherein the polymerization may be conducted at 70 °C to 80°C for 3 to 10 hours.

Further, the polymerization may be conducted in an aqueous solvent, and in this case, the solvent is distilled water.

The emulsifier may be one or more selected from the group consisting of an anionic emulsifier, a cationic emulsifier and a non-ionic emulsifier, and for example, it may be one or more selected from the group consisting of alkylaryl sulfonate, alkalimethyl alkylsulfate, soap of fatty acid, oleic acid alkali salt, rosin acid alkali salt, lauryl acid alkali salt, sodium diethylhexyl phosphate, alcohol polyoxyethylene phosphonate, and phenol polyoxyethylene phosphonate. Further, the emulsifier may be used in the content of 5 parts by weight or less, specifically 3.0 parts by weight or less, or 0.5 parts by weight to 2.5 parts by weight, based on 100 parts by weight of the total monomers.

Further, the polymerization may be conducted, if necessary, using a polymerization initiator, wherein as the initiator, inorganic peroxide or organic peroxide may be used, and for example, a water-soluble polymerization initiator such as potassium persulfate, sodium persulfate, ammonium persulfate, and the like and an oil-soluble polymerization initiator such as cumene hydroperoxide, benzoyl peroxide, and the like, may be used.

Further, to promote the initiation of reaction of peroxide along with the polymerization initiator, an activator may be additionally used, and as the activator, one or more selected from the group consisting of sodium formaldehyde sulfoxylate, sodium ethylenediaminetetraacetate, ferrous sulfate, and dextrose may be used. Further, the polymerization initiator may be used in the content of 0.1 parts by weight to 10 parts by weight, specifically 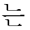 0.1 parts by weight to 5 parts by weight, based on 100 parts by weight of the total monomers.

Further, to increase the efficiency of polymerization reaction, a chain transfer agent may be further used, and as the chain transfer agent, C5 to 20 linear or branched alkylthiol compounds may be used, and for example, it may be one or more selected from the group consisting of hexanethiol, cyclohexanethiol, adamantanethiol, heptanethiol, octanethiol, nonanethiol, decanethiol, undecanethiol, dodecanethiol, hexadecanethiol and octadecanethiol.

Further, the epoxy group-containing acrylate terpolymer may be prepared by further conducting one or more steps selected from washing, dehydration and drying, wherein the washing, dehydration and drying may be conducted by a method commonly known in the art.

Meanwhile, the mixture comprises the epoxy-based acrylate terpolymer in the content of 0.1 parts by weight or more to less than 1.0 part by weight, based on 100 parts by weight of the polylactide polymer. Specifically, the mixture may comprise the epoxy-based acrylate terpolymer in the content of 0.1 parts by weight or more, 0.2 parts by weight or more, 0.3 parts by weight or more, or 0.4 parts by weight or more, or 0.5 parts by weight or more, and 0.9 parts by weight or less, 0.8 parts by weight or less, 0.75 parts by weight or less, or 0.7 parts by weight or less, based on 100 parts by weight of the polylactide polymer.

If the mixture comprises the epoxy-based acrylate terpolymer in the content less than 0.1 parts by weight, based on 100 parts by weight of the polylactide polymer, sufficient branching may not be achieved during reactive extrusion, and thus, it may be difficult to form bubbles in the subsequent blown extrusion. To the contrary, if the mixture comprises the epoxy-based acrylate terpolymer in the content of 1.0 part by weight or more, based on 100 parts by weight of the polylactide polymer, due to excessive branching, gel may be formed during extrusion of a blown film, and thus, bubbles may not be properly maintained, and blown extrusion may not smoothly progress.

The mixture may further comprise one or more additives selected from the group consisting of a slip agent and an anti-blocking agent, along with the above-explained polylactide polymer and epoxy group-containing acrylate terpolymer.

The slip agent may be used to reduce friction coefficient between films. As the slip agent, for example, one or more selected from the group consisting of oleamide, erucamide, stearamide, behenamide, oleyl palmitamide, steary erucamide, ethylene bis-oleamide, and N,N'-ethylene bis(stearamide) (EBS) may be used. In case the slip agent is used, the content may be 5 wt% or less, 3 wt% or less, or 1 wt% or less, and 0.1 wt% or more, 0.3 wt% or more, or 0.5 wt% or more, based on the total weight of the mixture.

The antiblock agent may be used to prevent adhesion of manufactured film and increase processability, and for example, one or more selected from the group consisting of natural silica, synthetic silica, talc, and calcium carbonate may be used. The antiblock agent may be included, for example, in the content of 10 wt% or less, 8 wt% or less, 5 wt% or less, or 3 wt% or less, and 0.1 wt% or more, 0.5 wt% or more, 1 wt% or more, or 1.5 wt% or more, based on the total weight of the mixture.

In one embodiment, the mixture may comprise oleamide as a slip agent and talc as an antiblock agent, wherein the oleamide may be included in the content of 0.1 wt% to 5 wt%, or 0.5 wt% to 1.0 wt%; and the talc may be included in the content of 0.1 wt% to 10 wt%, or 1.5 wt% to 3 wt%, based on the total weight of the mixture.

A metho for preparing the mixture is not specifically limited, and the mixture may be prepared by dry mixing the above-explained raw materials without a solvent. For mixing, a batch mixer, an extruder, and the like may be used, but is not limited thereto.

### (Step 2)

Next, the mixture is subjected to reactive extrusion to prepare branched polylactide polymer in the form of pellets.

The reactive extrusion is a chemical reaction process for inducing modification of polymer using an extruder as a reactor, and in the present disclosure, it is conducted for branching of polylactide polymer. The reactive extrusion does not require a solvent, is easy to move, knead, mix highly viscous reactants, and can set various reaction conditions.

The reactive extrusion may be conducted through a uniaxial extruder, or a biaxial extruder, and preferably, a biaxial extruder may be used. The biaxial extruder can control residence time distribution in the extruder, has excellent kneading performance, thermal conductivity and polymer transferring capability, and can easily put a screw and barrel together.

The reactive extrusion is preferably conducted at 150 °C to 220 °C. If the extrusion temperature is low, modification of polylactide polymer may not smoothly occur, and if the temperature is too high, the polylactide polymer and epoxy group-containing acrylate terpolymer may be modified.

In this regard, it is preferable that the extrusion temperature is 150 °C or more, 170 °C or more, or 180 °C or more, or 190 °C or more, and 220 °C or less, or 210 °C or less, or 200 °C or less.

The reactive extrusion temperature means a temperature at the reaction zone (barrel) of the extruder, and the temperatures of raw material inlet and die may be about 20 °C to 40 °C lower than the temperature of the reaction zone.

Further, it is preferable that during the reactive extrusion, a screw rotation speed of the extruder is 100 rpm or more, or 150 rpm or more, or 170 rpm or more, and 300 rpm or less, or 250 rpm or less, or 200 rpm or less, for sufficient mixing, prevention of modification of reactants and prevention of excessive branching.

A residence time in the reactive extrusion step may be preferably 1 minute or more, or 2 minutes or more, and 10 minutes or less, or 5 minutes or less, under the above-explained conditions.

The average long chain branch number per molecule of the branched polylactide polymer in the form of pellets prepared through the reactive extrusion may be 7 to 10, and due to such branching property, excellent melt strength and elasticity may be exhibited.

### (Step 3)

Next, the pellets are subjected to blown extrusion to manufacture a blown film.

The blown extrusion may be conducted using a blown film extruder commonly used in the manufacture of a polymer film, and although a small uniaxial extruder has been used in the examples below, the present disclosure is not limited thereto.

It is preferable that during the blown extrusion, a barrel temperature is 200 °C to 230 °C, and a barrel pressure is 10 bar to 50 bar. When the barrel temperature and pressure meet the above ranges, sufficient branching may occur, and thus, it is preferable in terms of melt elasticity. More preferably, the barrel temperature may be 200 °C or more, or 210 °C or more, and 230 °C or less, or 220 °C or less, and the barrel pressure may be 10 bar or more, or 15 bar or more, and 50 bar or less, or 30 bar or less.

The barrel pressure refers to a pressure of the whole barrels, and the barrel temperature refers to a temperature of barrels except the first barrel connected to the inlet of raw materials. Since the first barrel is directly connected to a raw material hopper, it is preferable to maintain a temperature of 30 °C to 100 °C for prevention of fusion of raw materials.

Further, for sufficient branching, it is preferable that a screw rotation speed is 10 rpm or more, or 15 rpm or more, and 50 rpm or less, or 30 rpm or less.

A branched polylactide film manufactured by the method may have weight average molecular weight, measured by gel permeation chromatography using a polystyrene standard, of 200,000 g/mol to 500,000 g/mol, and polydispersity index of 2.0 to 4.0, or 2.0 to 3.5. Measurement methods of the weight average molecular weight through gel permeation chromatography and polydispersity index will be explained in examples below.

According to the above-explained manufacturing method, a polylactide blown film that has high transparency and smooth surface, and thus, has excellent appearance property can be provided without additives such as a plasticizer, and the like. Particularly, the manufacturing method has remarkably low cost of manufacturing, compared to a casting method, and has excellent process efficiency and process stability, and thus, is suitable for large quantity production. A polylactide blown film manufactured according to the manufacturing method may be used instead of the existing nondegradable film, and is biodegradable, and thus, is environment-friendly. The polylactide blown film may be suitably used as a transparent film for packaging materials of foods such as meat, fish, vegetable, and the like, and toy packaging, and the like.

Hereinafter, preferable examples will be presented to assist in understanding of the present disclosure, but these examples are presented only as the illustrations of the invention, it is obvious to one of ordinary knowledge in the art that various alterations and modifications can be made within the categories and technical ideas of the invention, and such alterations and modifications belong to the claims attached.

### [Example]

### Preparation Example 1

In a reactor, 200 parts by weight of distilled water, and 0.5 parts by weight of sodium dodecyl benzene sulfonate (SDBS) were added, and the temperature was raised to 70°C while stirring. 0.2 parts by weight of potassium persulfate (KPS) was added and stirred for 20 minutes, and then, a mixture of 45 parts by weight of methyl methacrylate, 40 parts by weight of glycidyl methacrylate, 15 parts by weight of butyl methacrylate, and 0.7 parts by weight of 1-octanethiol was continuously added to the reactor over 4 hours, and after the addition was completed, it was cooled to 25°C while stirring for 30 minutes to prepare an emulsion polymerized latex. The prepared emulsion polymerized latex was solidified with a calcium acetate aqueous solution, heat treated to 90°C, and then, dehydrated, and dried at 60°C for 16 hours to prepare epoxy group-containing acrylate terpolymer.

### Preparation Example 2

In a reactor, 200 parts by weight of distilled water, and 0.5 parts by weight of sodium dodecyl benzene sulfonate (SDBS) were added, and the temperature was raised to 70°C while stirring. 0.2 parts by weight of potassium persulfate (KPS) was added and stirred for 20 minutes, and then, a mixture of 45 parts by weight of methyl methacrylate, 45 parts by weight of glycidyl methacrylate, 10 parts by weight of 2-ethylhexyl acrylate, and 0.7 parts by weight of 1-octanethiol was continuously added to the reactor over 4 hours, and after the addition was completed, it was cooled to 25°C while stirring for 30 minutes to prepare an emulsion polymerized latex. The prepared emulsion polymerized latex was solidified with a calcium acetate aqueous solution, heat treated to 90°C, and then, dehydrated, and dried at 60°C for 16 hours to prepare epoxy group-containing acrylate terpolymer.

### Preparation Example 3

In a reactor, 200 parts by weight of distilled water, and 0.5 parts by weight of sodium dodecyl benzene sulfonate (SDBS) were added, and the temperature was raised to 70°C while stirring. 0.2 parts by weight of potassium persulfate (KPS) was added and stirred for 20 minutes, and then, a mixture of 65 parts by weight of methyl methacrylate, 20 parts by weight of glycidyl methacrylate, 15 parts by weight of butyl methacrylate, and 0.7 parts by weight of 1-octanethiol was continuously added to the reactor over 4 hours, and after the addition was completed, it was cooled to 25°C while stirring for 30 minutes to prepare an emulsion polymerized latex. The prepared emulsion polymerized latex was solidified with a calcium acetate aqueous solution, heat treated to 90°C, and then, dehydrated, and dried at 60°C for 16 hours to prepare epoxy group-containing acrylate terpolymer.

### Example 1

Polylactide polymer (4032D, Natureworks) was dried at 80°C for 24 hours. 'Polylactide polymer' in Examples and Comparative Examples below refers to the polylactide polymer thus prepared.

To 97.5 parts by weight of the prepared polylactide polymer, 0.5 parts by weight of the epoxy group-containing acrylate terpolymer prepared in the Preparation Example 1, 0.5 parts by weight of oleamide, and 1.5 parts by weight of talc were mixed to prepare a mixture.

The mixture was extruded under the conditions of the following Table 1 using a biaxial extruder (Bautek, BA-19) to prepare pellets.

**[Table 1]**

| Barrel temperature (°C, setting value) | | | | | | | | Feed rate | Screw rate |
|---|---|---|---|---|---|---|---|---|---|
| Adapter | #1 | #2 | #3 | #4 | #5 | #6 | #7 | rpm | rpm |
| 190 | 190 | 190 | 190 | 190 | 190 | 170 | 150 | 9 | 200 |

Next, the prepared pellets were extruded under the conditions of the following Table 2 using a blown film extruder (Collin Lab & Pilot Solutions, Blown Film Line E Entrance) to manufacture a polylactide blown film.

**[Table 2]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 220 | 220 | 220 | 220 | 220 | 17 | 20 |

### Example 2

Pellets were prepared by the same method as Example 1, using a mixture comprising 97.25 parts by weight of polylactide polymer, 0.75 parts by weight of the epoxy group-containing acrylate terpolymer prepared in the Preparation Example 1, 0.5 parts by weight of oleamide, and 1.5 parts by weight of talc.

Next, the prepared pellets were extruded under the conditions of the following Table 3 using a blown film extruder to manufacture a polylactide blown film.

**[Table 3]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 215 | 215 | 215 | 215 | 215 | 19 | 21 |

### Example 3

Pellets were prepared by the same method as Example 1, using a mixture comprising 97.9 parts by weight of polylactide polymer, 0.1 parts by weight of the epoxy group-containing acrylate terpolymer prepared in the Preparation Example 2, 0.5 parts by weight of oleamide, and 1.5 parts by weight of talc.

Next, the prepared pellets were extruded under the conditions of the following Table 4 using a blown film extruder to manufacture a polylactide blown film.

**[Table 4]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 220 | 220 | 220 | 220 | 220 | 16 | 21 |

### Example 4

Pellets were prepared by the same method as Example 1, using a mixture comprising 97.1 parts by weight of polylactide polymer, 0.9 parts by weight of the epoxy group-containing acrylate terpolymer prepared in the Preparation Example 2, 0.5 parts by weight of oleamide, and 1.5 parts by weight of talc.

Next, the prepared pellets were extruded under the conditions of the following Table 5 using a blown film extruder to manufacture a polylactide blown film.

**[Table 5]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 220 | 220 | 220 | 220 | 220 | 19 | 20 |

### Comparative Example 1

Pellets were prepared by the same method as Example 1, using a mixture comprising 98.0 parts by weight of polylactide polymer, 0.5 parts by weight of oleamide, and 1.5 parts by weight of talc.

Next, the prepared pellets were extruded under the conditions of the following Table 6 using a blown film extruder to manufacture a polylactide blown film.

**[Table 6]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 210 | 210 | 210 | 210 | 210 | 21 | 24 |

### Comparative Example 2

Pellets were prepared by the same method as Example 1, using a mixture comprising 97.0 parts by weight of polylactide polymer, 1.0 part by weight of the epoxy group-containing acrylate terpolymer prepared in the Preparation Example 1, 0.5 parts by weight of oleamide, and 1.5 parts by weight of talc.

Next, the prepared pellets were extruded under the conditions of the following Table 7 using a blown film extruder to manufacture a polylactide blown film.

**[Table 7]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 220 | 220 | 220 | 220 | 230 | 18 | 14 |

### Comparative Example 3

Pellets were prepared by the same method as Example 1, using a mixture comprising 97.5 parts by weight of polylactide polymer, 0.5 parts by weight of a chain extender Joncryl-ADR 4468^{®} manufactured by BASF, 0.5 parts by weight of oleamide, and 1.5 parts by weight of talc.

Next, the prepared pellets were extruded under the conditions of the following Table 8 using a blown film extruder to manufacture a polylactide blown film.

**[Table 8]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 225 | 225 | 225 | 225 | 235 | 29 | 20 |

### Comparative Example 4

Pellets were prepared by the same method as Example 1, using a mixture comprising 97.5 parts by weight of polylactide polymer, 0.5 part by weight of the epoxy group-containing acrylate terpolymer prepared in the Preparation Example 3, 0.5 parts by weight of oleamide, and 1.5 parts by weight of talc.

Next, the prepared pellets were extruded under the conditions of the following Table 9 using a blown film extruder to manufacture a polylactide blown film.

**[Table 9]**

| Barrel temperature (°C, setting value) | | | | | | Pressure | Screw rate |
|---|---|---|---|---|---|---|---|
| #1 | #2 | #3 | #4 | #5 | adapter | Bar | rpm |
| 50 | 220 | 220 | 220 | 220 | 225 | 16 | 21 |

### Experimental Example

### (1) GPC (gel permeation chromatography) analysis of pellet

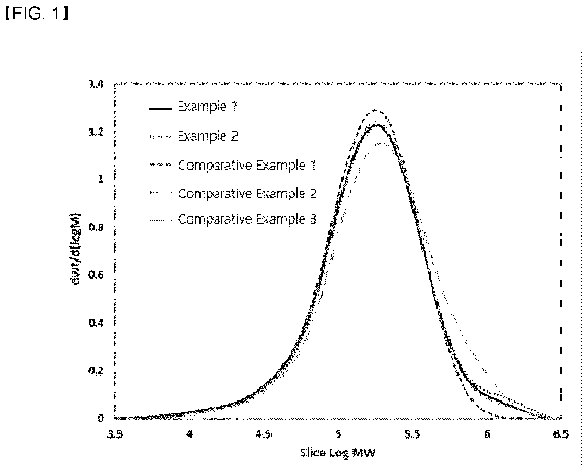

Using a gel permeation chromatography (GPC, Tosoh ECO SEC Elite) equipped with a differential refractive index detector (RI), number average molecular weight (Mn), weight average molecular weight (Mw), peak top molecular weight (Mp), Z average molecular weight (Mz), and polydispersity index (PDI) of each pellet prepared in Examples and Comparative Examples were measured, and the results were shown in the following Table 10 and Fig. 1.

The peak top property was confirmed by obtaining a differential molecular weight distribution curve wherein the horizontal axis is log molecular weight, [log(M)], and the vertical axis is differential of concentration fraction w to log molecular weight, dw/dlog(M).

GPC measurement conditions are as follows.
Column: two PLgel Olexis(Polymer Laboratories) columns
Solvent: tetrahydrofurane (THF)
Flow rate: 1.0 ml/min
Column temperature: 40°C
Sample: 1.5 mg/1.0 ml THF
Standard material: polystyrene (corrected with cubic function, using 10 kinds with molecular weights of 580 / 3,320 / 9,310 / 29,460 / 75,050 / 128,900 / 298,600 / 739,500 / 2,327,000 / 6,545,000)

**[Table 10]**

| Pellet | Kind and amount of branching agent used | Mn | Mw | Mp | Mz | PDI |
|---|---|---|---|---|---|---|
| Comparative Example 1 | - | 112,000 | 206,000 | 182,000 | 317,000 | 1.84 |
| Example 1 | Preparation Example 1 0.5 parts by weight | 107,000 | 233,000 | 185,000 | 452,000 | 2.18 |
| Example 2 | Preparation Example 1 0.75 parts by weight | 115,300 | 252,000 | 186,200 | 538,800 | 2.19 |
| Example 3 | Preparation Example 2 0.1 parts by weight | 106,400 | 223,100 | 183,500 | 381,000 | 2.10 |
| Example 4 | Preparation Example 2 0.9 parts by weight | 110,300 | 237,400 | 184,600 | 473,700 | 2.15 |
| Comparative Example 2 | Preparation Example 1 1.0 parts by weight | 111,000 | 234,000 | 182,000 | 466,000 | 2.11 |
| Comparative Example 3 | Joncryl 4468 0.5 parts by weight | 127,000 | 275,000 | 200,000 | 523,000 | 2.16 |
| Comparative Example 5 | Preparation Example 3 0.5 parts by weight | 109,300 | 232,000 | 184,300 | 441,000 | 2.12 |

Referring to Table 7, it can be confirmed that unlike the pellet of Comparative Example 1 wherein a branching agent was not used, in the pellets of Examples 1, 2, and Comparative Example 2 wherein a branching agent was used, branching occurred.

### (2) GPC (gel permeation chromatography) analysis of blown film

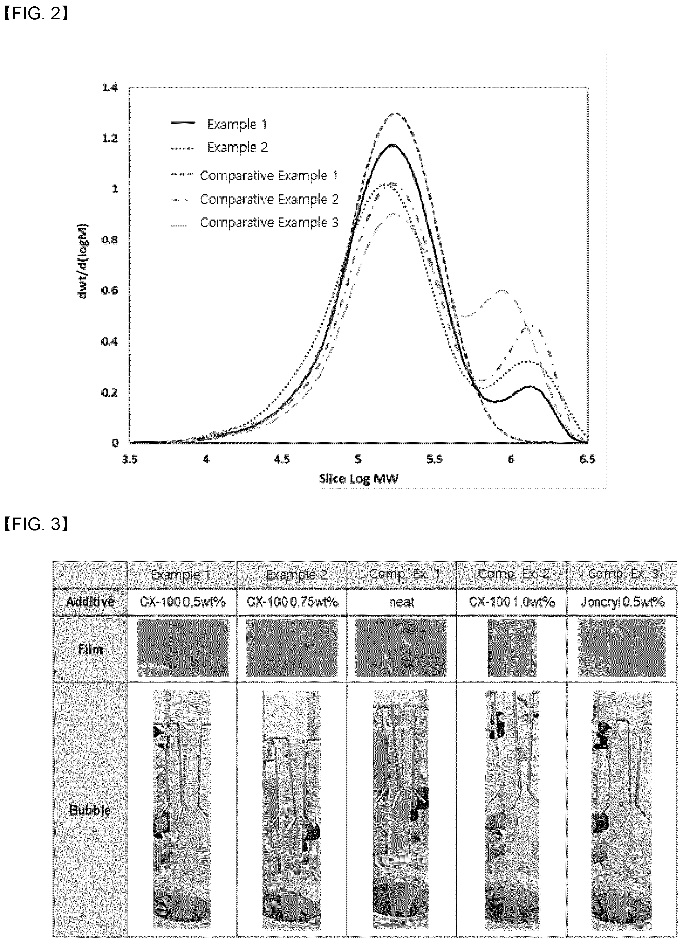

GPC analysis of each blown film manufactured in Examples and Comparative Examples was conducted by the same method as the (1), and the results were shown in the following Table 11 and Fig. 2.

**[Table 11]**

| Blown film | Kind and amount of branching agent used | Mn | Mw | Mp | Mz | PDI |
|---|---|---|---|---|---|---|
| Comparative Example 1 | - | 112,000 | 206,000 | 178,000 | 311,600 | 1.79 |
| Example 1 | Preparation Example 1 0.5 parts by weight | 111,700 | 291,200 | 166,000 /1,327,800 | 761,800 | 2.61 |
| Example 2 | Preparation Example 1 0.75 parts by weight | 135,200 | 415,000 | 166,200 /1,331,400 | 920,000 | 3.06 |
| Example 3 | Preparation Example 2 0.1 parts by weight | 110,800 | 247,600 | 160,300 /847,200 | 398,100 | 2.23 |
| Example 4 | Preparation Example 2 0.9 parts by weight | 120,100 | 422,300 | 162,900 /1,437,100 | 1,128,000 | 3.51 |
| Comparative Example 2 | Preparation Example 1 1.0 parts by weight | 116,600 | 411,700 | 165,400 /1,386,600 | 1,054,700 | 3.53 |
| Comparative Example 3 | Joncryl 4468 0.5 parts by weight | 142,400 | 437,600 | 178,700/906,400 | 938,800 | 3.07 |
| Comparative Example 5 | Preparation Example 3 0.5 parts by weight | 109,900 | 242,900 | 162,000 /902,300 | 402,800 | 2.21 |

### (3) Measurement of thickness and haze of blown film

Using a Mitutoyo thickness gauge, thicknesses of the blown film was measured at 3 different points and the average value was derived and determined as the thickness of the blown film.

Haze of the blown film was measured with a colorimeter according to ASTM D1003, using C/2 as a light source. Wherein, the thicknesses of specimens were all in the range of 70-80 µm (see the following Table 9), and the thickness was measured 10 times per one specimen and the average value was selected.

The measurement results of thickness and haze were shown in the following Table 12.

**[Table 12]**

| Blown film | Thickness (mm) | Haze(%) |
|---|---|---|
| Comparative Example 1 | 0.077 | 19.07 |
| Example 1 | 0.080 | 21.03 |
| Example 2 | 0.075 | 15.67 |
| Comparative Example 2 | 0.079 | 32.84 |
| Comparative Example 3 | 0.071 | 37.18 |

### (4) Assessment of bubble stability during manufacture of blown film, and appearance of blown film.

Bubble stability when manufacturing each blown film of Examples and Comparative Examples, and appearance of the manufactured blown film (degree of smoothness) were visually assessed. Fig. 3 shows the images of bubbles when manufacturing a blown film, and the surface of the manufactured film.

Bubble stability when manufacturing a blown film, namely, a degree of maintaining the shape without being torn and a degree of smoothness of the film surface were equally excellent in Examples 1, 2 and Comparative Example 3. Meanwhile, in Comparative Example 2 wherein the branching agent of Preparation Example 1 was used in the amount of 1 part by weight or more, based on 100 parts by weight of polylactide, bubbles were continuously torn and did not maintain the shape, and thus, bubble stability was the poorest, and the surface of the manufactured film was also rough.

Taken these results and the molecular weight measurement results of the blown films together, it is judged that in Examples 1, 2 and Comparative Example 3 using a branching agent, a sufficient branching structure was formed and elasticity increased, thus exhibiting excellent bubble stability was exhibited, and thus, the manufactured film had excellent appearance property. Meanwhile, it is judged that in Comparative Example 2, due to excessive branching, gel was formed during extrusion of a blown film, and thus, bubbles were not maintained.

Meanwhile, comparing the blown films of Examples 1,2 with the blown film of Comparative Example 3, haze values in Examples 1 and 2 are remarkably low compared to Comparative Example 3, and thus, transparencies in Examples 1 and 2 are very excellent.

From the above experiment results, it can be confirmed that the polylactide blown film manufactured according to the present disclosure exhibits processability similar to the existing polylactide blown film using a branching agent, and yet, has remarkably excellent haze property.

## Claims

1. A method for manufacturing a polylactide blown film comprising steps of:
preparing a mixture comprising polylactide polymer and epoxy group-containing acrylate terpolymer (step 1);
subjecting the mixture to reactive extrusion to prepare branched polylactide polymer in the form of pellets (step 2); and
subjecting the pellets to blown extrusion to manufacture a blown film (step 3),
wherein the epoxy group-containing acrylate terpolymer comprises 30 wt% to 50 wt% of repeat units derived from first alkyl (meth)acrylate monomers, 30 wt% to 60 wt% of repeat units derived from glycidyl (meth)acrylate monomers, and 10 wt% to 20 wt% of repeat units derived from second alkyl (meth)acrylate monomers, and the first alkyl (meth)acrylate monomers and the second alkyl (meth)acrylate monomers are different from each other, and
the mixture of the step 1 comprises epoxy group-containing acrylate terpolymer in the content of 0.1 parts by weight or more and less than 1.0 part by weight, based on 100 parts by weight of the polylactide polymer.

2. The method for manufacturing a polylactide blown film according to claim 1, wherein the epoxy group-containing acrylate terpolymer comprises 30 wt% to 45 wt% of repeat units derived from first alkyl (meth)acrylate monomers, 30 wt% to 45 wt% of repeat units derived from glycidyl (meth)acrylate monomers, and 10 wt% to 20 wt% of repeat units derived from second alkyl (meth)acrylate monomers.

3. The method for manufacturing a polylactide blown film according to claim 2, wherein the number of epoxy groups per molecule of the epoxy group-containing acrylate terpolymer is 30 to 80.

4. The method for manufacturing a polylactide blown film according to claim 2, wherein each of the first alkyl (meth)acrylate and the second alkyl (meth)acrylate is independently, at least one selected from the group consisting of methyl(meth)acrylate, butyl acrylate and 2-(ethylhexyl)acrylate.

5. The method for manufacturing a polylactide blown film according to claim 1, wherein the polylactide film has weight average molecular weight of 200,000 g/mol to 500,000 g/mol, measured by gel permeation chromatography using polystyrene standard.

6. The method for manufacturing a polylactide blown film according to claim 1, wherein the mixture of the step 1 comprises epoxy-based acrylate terpolymer in the content of 0.5 parts by weight to 0.75 parts by weight, based on 100 parts by weight of the polylactide polymer.

7. The method for manufacturing a polylactide blown film according to claim 1, wherein the mixture of the step 1 further comprises one or more selected from the group consisting of a slip agent and an anti-blocking agent.

8. The method for manufacturing a polylactide blown film according to claim 1, wherein the reactive extrusion of the step 2 is conducted at a temperature of 150 °C to 220 °C.

9. The method for manufacturing a polylactide blown film according to claim 1 or 8, wherein in the reactive extrusion of the step 2, a screw rotation speed of an extruder is 100 rpm to 300 rpm.

10. The method for manufacturing a polylactide blown film according to claim 1, wherein the blown extrusion of the step 3 is conducted at a temperature of 200 °C to 230 °C; and pressure of 10 bar to 50 bar.
